# EUROPÄISCHE PATENTSCHRIFT

(11) **EP 3 342 264 B1**
(45) Veröffentlichungstag und Bekanntmachung des Hinweises auf die Patenterteilung: **02.09.2020**
(21) Anmeldenummer: 17208514.4
(22) Anmeldetag: 19.12.2017
(51) Int. Cl.: A01B 63/111, A01B 63/114, A01B 63/14

(54) **VORRICHTUNG UND VERFAHREN ZUR REGELUNG DES FAHRBETRIEBS EINES FAHRZEUGS MIT EINEM ANBAUGERÄT ODER ANHÄNGER**
DEVICE AND METHOD FOR CONTROLLING THE OPERATION OF A VEHICLE WITH A TOWING DEVICE OR TRAILER
DISPOSITIF ET PROCÉDÉ DE RÉGLAGE DU FONCTIONNEMENT D'UN VÉHICULE AVEC UN OUTIL PORTÉ OU UNE REMORQUE

(30) Priorität: 29.12.2016 DE 102016226287
(43) Veröffentlichungstag der Anmeldung: 04.07.2018
(73) Patentinhaber: Robert Bosch GmbH, 70442 Stuttgart (DE)
(72) Erfinder: Buchtala, Boris, 75417 Muehlacker (DE)

(56) Entgegenhaltungen:
- WO-A1-2006/021207
- DE-A1-102011 051 827
- FR-A1- 2 681 500
- JP-A- S63 253 257
- JP-A- 2016 198 034

## Beschreibung

Die vorliegende Erfindung betrifft eine Vorrichtung für ein Fahrzeug, insbesondere einen Traktor, zur Regelung des Fahrbetriebs eines Fahrzeugs mit einem Anbaugerät oder Anhänger sowie ein hierfür geeignetes Betriebsverfahren.

Insbesondere findet die Erfindung Anwendung bei einem Traktor, einem landwirtschaftlichen Ackerschlepper, einer mobilen Arbeitsmaschine zur Feldbearbeitung oder dergleichen. Traktoren bzw. Ackerschlepper werden als universell einsetzbare Arbeitsmaschinen vorrangig in der Landwirtschaft zur Bearbeitung von Ackerböden eingesetzt. Das Pflügen als eine der häufigsten Anwendungen stellt hierbei hohe Anforderungen an den Antriebsstrang des Traktors und die Regelgüte einer elektronisch-hydraulischen Hubwerksregelung, denn nur mit einem abgestimmten Betrieb können die Pflügearbeiten schnell und effizient durchgeführt werden. Vor allem bei stark inhomogenen und sehr feuchten Böden besteht aufgrund einer sehr großen Widerstandskraft am Pflug die Möglichkeit, dass der Traktor steckenbleibt und/oder der Motor abgewürgt wird. Zusätzlich zu einer Lageregelung des Pflugs kann eine Zugkraftregelung vorgesehen sein, die ein Abwürgen des Motors dadurch zu verhindern versucht, dass die Zugkraft am traktorseitigen Gelenk des Unterlenkers gemessen und diese bzw. deren Gradient auf einen Wert geregelt wird, welcher ein Abwürgen des Motors verhindert bzw. eine Reduzierung des Schlupfs der Antriebsräder bewirkt. Dies geschieht insbesondere durch ein (kurzzeitiges) Anheben des Pflugs und der daraus resultierenden Verringerung der Widerstandskraft des Pflugs.

Bei sehr feuchten Böden besteht jedoch weiterhin die Möglichkeit, dass sich der Traktor festfahren kann, ohne dass der Motor abgewürgt wird. Dies ist insbesondere anhand eines sehr großen Schlupfes der Antriebsräder zu erkennen, welcher keine oder keine mehr ausreichende Zugkraft bereitstellen lässt.

Um den Schlupf auf ein akzeptables Maß zu begrenzen und ein zu starkes Durchdrehen der Antriebsräder zu verhindern, kann das System der elektronisch-hydraulischen Hubwerksregelung mit einem Radarsensor ausgestattet sein, welcher die tatsächliche Geschwindigkeit des Traktors auf Basis des Doppler-Effekts misst. Da zusätzlich die Raddrehzahl der Antriebsräder bestimmbar sein kann, kann durch einen Vergleich der tatsächlichen Geschwindigkeit mit der auf Basis der Raddrehzahl bestimmten (erwarteten) Geschwindigkeit auf den (aktuellen) Schlupf der Antriebsräder geschlossen werden. Ein zusätzlich der Zugkraftregelung überlagerter Schlupfregelkreis kann durch Anheben des Pflugs den maximal akzeptablen Schlupf sicherstellen und somit ein Festfahren des Traktors verhindern. Zusätzlich kann ein fest vorgegebener Schlupfsollwert eingeregelt werden, um ggf. eine energieeffiziente Betriebsweise zu erreichen, weil hierdurch die Zugkräfte erhöht und der Motor ggf. besser ausgelastet werden können.

Aus der WO 2006/021207 A1 ist eine Vorrichtung an einem Traktor bekannt, wobei eine Kamera zur selektiven Erfassung von Pflanzen auf Ackerböden und zur Ermittlung der Geschwindigkeit des Fahrzeugs herangezogen wird.

Die DE 10 2011 051 827 A1 beschreibt eine landwirtschaftliche Arbeitsmaschine, die aufgrund der von einer - senkrecht auf den Boden gerichteten - Kamera zur Erstellung von optischen Bodenaufnahmen des von der Arbeitsmaschine überfahrenen Bodens gesteuert wird. Eine Recheneinrichtung ermittelt eine Geschwindigkeit der landwirtschaftlichen Arbeitsmaschine, wobei die Recheneinrichtung den Schlupf der Antriebsräder bestimmen kann.

Die JP 2016 198034 A bezieht sich auf eine fahrbare landwirtschaftliche Arbeitsmaschine zur Einbringung von Pflanzen in gleichen Intervallen in den Boden. Hierbei ist ein Drehzahlsensor den Hinterrädern des Fahrzeugs zugeordnet, der jede Anzahl an Umdrehungen der Hinterräder als Information über die Geschwindigkeit des Fahrzeugs misst. Hierdurch wird eine Information über die Fahrgeschwindigkeit des Fahrzeugs durch den Drehzahlsensor erhalten. Der Drehzahlsensor misst die Drehzahl der Hinterräder zur Bestimmung der Fahrgeschwindigkeit des Fahrzeugs.

Die FR 2 681 500 A beschreibt einen Traktor mit einem Hubmechanismus zur Höhenregelung eines angebauten Pfluges, der von einer Auswerteeinheit für Ultraschallsignale aktivierbar ist.

Aus der JP S63253257 A ist ein Traktor mit einem angebauten Pflug bekannt, bei dem am Bug des Traktors ein Geschwindigkeitssensor mit einer Kamera angebracht ist, wobei die Fahrgeschwindigkeit des Traktors aus trigonometrischen Daten berechnet wird.

Auch wenn die geschilderten Ansätze für den Betrieb solcher Traktoren bzw. Ackerschlepper bereits gute Ergebnisse liefern, so sind diese Systeme gleichwohl teilweise sehr komplex und damit kostenintensiv, nicht ausreichend verlässlich und/oder zu ungenau. Insoweit besteht insbesondere bei der Ermittlung des Antriebsschlupfs bzw. der Bestimmung der tatsächlichen Geschwindigkeit Bedarf an Verbesserungen.

Hiervon ausgehend ist es Aufgabe der vorliegenden Erfindung, eine Vorrichtung und ein Verfahren zu schaffen, die die genannten Nachteile lindert oder sogar vermeidet. Insbesondere soll auf konstruktiv einfache und für die Umgebungsbedingungen im Feld geeignete Art die Ermittlung der tatsächlichen Fahrgeschwindigkeit und der Geschwindigkeit mindestens eines Fahrzeugrades verbessert werden.

Diese Aufgaben werden gelöst mit einer Vorrichtung und einem Verfahren gemäß den unabhängigen Patentansprüchen. Weitere Ausgestaltungen der Erfindung sind in den abhängigen Patentansprüchen angegeben. Es ist darauf hinzuweisen, dass die Beschreibung, insbesondere im Zusammenhang mit den Figuren, weitere Einzelheiten und Weiterbildungen der Erfindung anführen.

Hierzu trägt eine Vorrichtung zur Regelung des Fahrbetriebs eines Fahrzeugs mit einem Anbaugerät oder Anhänger bei, umfassend zumindest eine

Geschwindigkeitserfassungseinheit mit mindestens einer Kamera, einer Auswerteeinheit und einer datenleitenden Verbindung hin zu einem Steuergerät, wobei die Geschwindigkeit des Fahrzeugs mit mindestens einer Kamera und die Geschwindigkeit mindestens eines Fahrzeugrades sensorisch bestimmbar sind.

Dabei handelt es sich bei dem Fahrzeug insbesondere um einen Traktor bzw. einen sogenannten Ackerschlepper. Als Anbaugerät wird insbesondere ein Pflug oder ein ähnliches Bodenbearbeitungsgerät angesehen. Zur Bestimmung der "tatsächlichen" Geschwindigkeit des Fahrzeugs ist zumindest eine Geschwindigkeitserfassungseinheit mit zumindest einer (feststehenden oder bewegbaren) Kamera vorgesehen. Weiter ist eine Senorik zur Ermittlung der Umdrehungsgeschwindigkeit mindestens eines Fahrzeugrades vorgesehen, die derselben oder einer weiteren Geschwindigkeitserfassungseinheit zuordenbar ist. Die zumindest eine Geschwindigkeitserfassungseinheit (mit mindestens einer Kamera bzw. der Sensorik) ist mit einer Auswerteeinheit elektrisch und datenleitend verbunden, welche eingerichtet ist, deren Messsignale zu verarbeiten und den Betrieb des Fahrzeugs und/oder eines Anbaugerätes bzw. Anhängers zu regeln bzw. vorzugeben. Die Auswerteeinheit ist insbesondere eingerichtet, eine Analyse der Bilddaten der mindestens einen Kamera vorzunehmen.

Die mittels der Auswerteeinheit bestimmten Geschwindigkeiten des Fahrzeugs und mindestens eines Fahrzeugrades können mit vorgegebenen (z. B. gespeicherten und/oder von dem Bediener des Fahrzeugs eingestellten) Parametern bzw. Sollvorgaben abgeglichen oder beeinflusst werden, wobei dann auch ein Regelungssignal an das Steuergerät übermittelt wird und dabei der Betrieb einer hydraulischen bzw. elektrohydraulischen Betätigungseinheit des Anbaugeräts beeinflusst werden kann. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Mindestens eine datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Die Geschwindigkeit mindestens eines Fahrzeugrades ist sensorisch bestimmbar, wobei der Begriff "sensorisch" die Bestimmung durch die mindestens eine Kamera oder durch einen (anderen) seperaten Sensor, z. B. Drehzahlsensor, umfasst.

Es kann zweckmäßig sein, dass die mindestens eine Kamera am Fahrzeug und/oder dem Anbaugerät angeordnet ist. Ggf. können auch mehrere Kameras vorgesehen sein, so dass Fahrzeug und Anbaugerät mit einer Kamera ausgeführt sein können, die spezifischen Funktionen zugeordnet sind.

Die Auswerteeinheit kann mit der mindestens einen Kamera elektrisch und datenleitend verbunden und eingerichtet sein, deren Betrieb zu regeln und deren Messsignale zu verarbeiten. Insbesondere ist die Auswerteeinheit eingerichtet, aus Messsignalen der mindestens einen Kamera jeweils ein charakteristisches Bodenprofil (kontinuierlich) zu ermitteln, anhand von charakteristischen Bezugspunkten der Bodenprofile einen räumlichen (bzw. geometrischen, örtlichen) und/oder zeitlichen Versatz der Messsignale (bzw. Bildsignale) zu diesen charakteristischen Bezugspunkten zu bestimmen und daraus die tatsächliche Geschwindigkeit des Fahrzeugs zu ermitteln. Die in der Auswerteeinheit bestimmte tatsächliche Geschwindigkeit kann mit vorgegebenen Parametern oder Sollvorgaben des Steuergeräts abgeglichen oder beeinflusst werden, wobei dann auch ein Regelungssignal an das Steuergerät übermittelt und damit der Betrieb der hydraulischen bzw. elektrohydraulischen Betätigungseinheit des Anbaugeräts beeinflusst werden kann.

Wenn die mindestens eine Kamera zur Bestimmung der Fahrzeuggeschwindigkeit in unmittelbarer Nähe hinter einem Hinterrad angeordnet ist, entsteht durch den Reifenabdruck des Hinterradesrades während der Fahrt eine charakteristisch und gut mit der Kamera detektierbare Profilerhebung. Die mindestens eine Kamera oder ggf. eine zweite Kamera ist zur Bestimmung der Radgeschwindigkeit auf das Reifenprofil des Hinterradesrades gerichtet.

Da der bekannte Radarsensor sehr kostenintensiv ist, wird mit der vorgestellten Vorrichtung eine geeignete Sensoranordnung vorgeschlagen, welche ebenso die reale Geschwindigkeit des Traktors ermittelt, jedoch mit deutlichen Kostenvorteilen gegenüber einem Radarsensor. Zudem wird mit der vorgeschlagenen Vorrichtung die Raddrehzahl bestimmt, womit - sofern diese per Kamera bestimmt wird - ein Drehzahlsensor nicht mehr erforderlich ist. Hierfür wird eine Sensoranordnung bestehend aus mindestens einer Videokamera vorgeschlagen. Durch den Anbau von mindestens einer Videokamera wird die tatsächliche Geschwindigkeit eines Ackerschleppers über Grund während der Feldbearbeitung (z. B. Pflügen, Grubbern etc.) sowie die Raddrehzahl bzw. die Umfangsgeschwindigkeit des Antriebsradesrades bestimmt. Mit Hilfe der Geschwindigkeit über Grund und der Umfangsgeschwindigkeit des Antriebsradesrades (oder der Antriebsräder) kann deren Schlupf bestimmt und durch eine geeignete Regelung begrenzt werden.

Ein weiterer Gedanke besteht in einer Anordnung von mindestens einer Videokamera an einem Ackerschlepper (o.ä. mobile Arbeitsmaschine zur Feldbearbeitung) zur Bestimmung der tatsächlichen Fahrgeschwindigkeit über Grund. Diese sind zweckmäßig so anzubringen, dass sie während der Fahrt den mit dem/den Antriebsrädern überfahrenen Boden aufnimmt. Eine zweite Kamera kann so eingestellt sein, dass sie das Reifenprofil während der Fahrt aufnimmt. Durch eine geeignete Verarbeitung des Videostreams kann die Geschwindigkeit der aufgenommenen Ausschnitte relativ zur Kamera bzw. zum Traktor ermittelt werden.

Gegebenenfalls wird jede der angesprochenen Geschwindigkeiten mittels einer separaten Videokamera ermittelt. Zudem ist möglich, dass jede der angesprochenen Geschwindigkeiten mittels einer einzelnen Videokamera ermittelbar ist. Besitzt das Umfelderfassungssystem des Traktors noch weitere Kameras, so kann deren Signal zur Stützung bzw. Abgleich verwendet werden. Traktoren fahren mit geringer Geschwindigkeit über den Acker und der Boden ist durch seine Strukturierung (im Gegensatz zum Straßenasphalt) immer "einzigartig" und ermöglicht dadurch vorteilhaft den Einsatz von Kameras zur Geschwindigkeitsbestimmung. Ferner hinterlässt der Traktorreifen mit seinen Stollen bei der Fahrt im Feld eine markante Strukturierung im Boden, die eine Identifikation im Sinne der Bildverarbeitung erleichtert.

Die Geschwindigkeit des mindestens eines Fahrzeugradesrades kann mit einem Drehzahlsensor oder einer Kamera bestimmbar sein. Hierzu sind nachfolgende Ausführungsformen vorteilhaft:
Sofern zwei Kameras vorgesehen sind, ist eine erste Kamera zur Bestimmung der Fahrzeuggeschwindigkeit so angeordnet, dass sie einen möglichst großen Bereich des Ackerbodens aufnimmt. Eine zweite Kamera dient zur Bestimmung der Radgeschwindigkeit und ist hierfür auf den Reifen des Antriebsradesrades gerichtet. Wird der Reifen durch ein Schutzblech oder ähnliches verdeckt, so kann ggf. ein Sichtblech ausgespart oder transparent gestaltet werden. Kommen im Zusammenhang mit einem Umfelderfassungssystem weitere Kameras zum Einsatz, so können diese zur Stützung oder Plausibilisierung der Werte herangezogen werden.

Zudem kann auch nur eine einzelne Kamera so angeordnet sein, dass diese sowohl den Boden als auch das Antriebsrad aufnimmt. Durch eine geeignete Segmentierung des Kamerabilds in unterschiedlich auszuwertende Bereiche könnten mit der einzelnen Kamera beide Geschwindigkeitssignale bestimmt werden.

Der Videostream mit den sukzessive aufgenommenen Bildern dient als Basis für die Geschwindigkeitsbestimmung. Aus den Bildern wird mittels einer Kreuzkorrelation oder mit Methoden wie "optischer Fluss" die geometrische Verschiebung von einem Bild zu dem darauffolgenden Bild ermittelt. Mit der bekannten Bildwiederholfrequenz lässt sich die Geschwindigkeit des im Bildausschnitt befindlichen Objektes (Boden, Reifenprofil, etc.) relativ zum Traktor und/oder der Kamera bestimmen.

In einer weiteren Konfiguration kann mit einer einzelnen Kamera die Geschwindigkeit über Grund und mittels eines Raddrehzahlsensors die Geschwindigkeit des Fahrzeugradesrades ermittelt werden.

Auch kann die mittels des Drehzahlsensors ermittelte Radgeschwindigkeit verwendet werden, wenn ein vorgebbarer Abweichungsparameter erreicht wird. Der Abweichungsparameter stellt insbesondere ein Maß für den Unterschied der unabhängig voneinander bestimmten "tatsächlichen" Geschwindigkeiten dar, wobei bei einem zu großen Unterschied eine Entscheidung dahingehend getroffen wird, der mittels des Drehzahlsensors ermittelten Radgeschwindigkeit den Vorrang bzw. eine größere Bedeutung zu verleihen. So kann der Abweichungsparameter bspw. so festgesetzt sein, dass in Situationen, in denen eine Messung mit der zweiten Kamera versagt oder zu ungenau ist (z. B. wenn das Reifenprofil mit feuchter Erde zugesetzt ist), kurzzeitig auf die Geschwindigkeitsmessung mittels des Drehzahlsensors zugegriffen werden. Wird der Abweichungsparameter wieder unterschritten, erfolgt wieder eine vorrangige Berücksichtigung der Geschwindigkeitsmessung des Fahrzeugradesrades mittels der Kamera.

Bevorzugt ist eine einzelne Kamera hin zum Boden und auf das Fahrzeugrad gerichtet. In diesem Fall gehen die sensorische Bestimmung der Geschwindigkeit mindestens eines Fahrzeugradesrades und die Bestimmung der (tatsächlichen) Geschwindigkeit des Fahrzeugs über dem Boden allein auf Messdaten dieser einzelnen Kamera zurück.

Es können mindestens zwei Kameras vorgesehen sein, wobei eine erste Kamera hin zum Boden (zur Bestimmung der Geschwindigkeit des Fahrzeugs über Grund) und eine zweite Kamera auf das Fahrzeugrad (zur sensorischen Bestimmung der Geschwindigkeit des Fahrzeugradesrades) gerichtet ist. Die zweite Kamera kann somit einen Drehzahlsensor ersetzen.

Zweckmäßig ist die mindestens eine Kamera zumindest am Fahrzeug oder an dem Anbaugerät oder Anhänger angeordnet. Vorzugsweise sind die erste Kamera und die zweite Kamera in Fahrtrichtung des Fahrzeugs hintereinander positioniert. Bevorzugt sind die erste Kamera und die zweite Kamera zueinander versetzt angeordnet.

Die Vorrichtung kann eine hydraulische bzw. elektrohydraulische Betätigungseinheit umfassen, die einen Hubmechanismus für das Anbaugerät hat, der von der Auswerteeinheit aktivierbar ist. Hierfür sind insbesondere elektrische oder datenleitende Verbindungen vorgesehen. Insbesondere sind die Auswerteeinheit und der Hubmechanismus so eingerichtet, dass die Auswerteeinheit mindestens eine Zustandsgröße einstellen und/oder auf ein Stellorgan des Hubmechanismus zugreifen kann. Zweckmäßig ist zu der mindestens einen Kamera zusätzlich eine Zugkraftmesseinrichtung vorhanden, die datenleitend mit der Auswerteeinrichtung verbunden ist und die eine Bestimmung der Zugkraft auf direktem oder indirektem Wege ermöglicht.

Mit der hier vorgeschlagenen Vorrichtung wird in vorteilhafter Weise die Geschwindigkeit eines Traktors über dem Boden optisch mit einer auf den Boden gerichteten Kamera erfasst. Zudem wird die Geschwindigkeit der Räder nach einer Ausführungsform ebenso optisch mit einer (ggf. weiteren oder der gleichen) Kamera erfasst. Gemäß einer weiteren Ausbildung wird die Geschwindigkeit der Räder über die Ermittlung der Raddrehzahl bestimmt. Die Messung der Geschwindigkeit über Boden erfolgt durch Bildverarbeitung bzw. per Kamera. Zur Messung der Radgeschwindigkeit wird eine Kamera oder ein Drehzahlsensor herangezogen.

Weitere Details der Vorrichtung ergeben sich auch aus der nachfolgenden Erläuterung zum Betriebsverfahren. Insofern können die Erläuterungen zum Verfahren hier ergänzend herangezogen werden. Ebenso gilt, dass die vorstehenden Erläuterungen zur Vorrichtung die Beschreibung des Verfahrens ergänzen können.

Weiter wird ein Verfahren zur Regelung des Fahrbetriebs eines Fahrzeugs, insbesondere eines Traktors, mit einem Anbaugerät oder Anhänger an dem Fahrzeug vorgeschlagen. Das Verfahren kann insbesondere mit der hier ebenfalls vorgeschlagenen Vorrichtung durchgeführt werden, wobei die Auswerteeinheit dazu eingerichtet ist, das Verfahren durchzuführen. Das Verfahren umfasst zumindest die folgenden Schritte:
A) Bestimmen der Geschwindigkeit des Fahrzeugs mit der mindestens einen Kamera;
B) Bestimmen der Geschwindigkeit mindestens eines Fahrzeugradesrades;
C) Vergleichen der Geschwindigkeit des Fahrzeugs mit der Geschwindigkeit des mindestens einen Fahrzeugradesrades zur Ermittlung eines Antriebsschlupfs.

Die Geschwindigkeit des mindestens einen Fahrzeugradesrades gemäß Schritt B) kann mit einer Kamera oder einem Drehzahlsensor bestimmt werden.

Bevorzugt umfasst das Verfahren zumindest die folgenden Schritte:
a) Bestimmen eines Bodenprofils während der Fahrt des Fahrzeugs mittels mindestens einer hin zum Boden gerichteten Kamera;
b) Ermitteln zumindest eines zeitlichen oder räumlichen Versatzes der jeweils mit der mindestens einen Kamera bestimmten Bodenprofile;
c) Ermitteln der Geschwindigkeit des Fahrzeugs aus zumindest dem räumlichen oder zeitlichen Versatz;
d) Bestimmen eines Radprofils während der Fahrt des Fahrzeugs mittels mindestens einer Kamera;
e) Ermitteln zumindest eines zeitlichen oder räumlichen Versatzes der jeweils mit der mindestens einen Kamera bestimmten Radprofile;
f) Ermitteln der Geschwindigkeit des Fahrzeugradesrades aus zumindest dem zeitlichen oder räumlichen Versatz;
g) Vergleichen der ermittelten Geschwindigkeit zur Bestimmung eines Antriebsschlupfs.

Die Verfahrensschritte können in der hier angegebenen Reihenfolge durchgeführt werden. Es ist möglich, dass einzelne Schritte gleichzeitig und/oder zueinander überlagernd durchgeführt werden.

Es ist möglich, dass zumindest die Schritte a) und d) in einer zeitlich zueinander abgestimmten Weise erfolgen. Insbesondere kann Schritt a) so durchgeführt werden, dass dort ein Abschnitt des mittels Schritt d) erfassten Radprofils auffindbar ist, dort also bei keinem Schlupf erwartet bzw. deren Abweichung bestimmt werden kann.

Bevorzugt wird das in Schritt a) ermittelte Bodenprofil vom Fahrzeug während der Fahrt des Fahrzeugs erzeugt.

Schritt a) umfasst insbesondere zumindest einen, bevorzugt alle, der folgenden Prozesse:
a.1) Ermitteln eines ersten Bodenprofils an einer Stelle A des Bodens mit einer ersten Kamera durch optische Bilderfassung (im Wesentlichen) schräg oder senkrecht hin zum Boden und zeitlichem Nachhalten der für das Bodenprofil charakteristischen Messsignale.
a.2) Ermitteln eines zweiten Bodenprofils an einer Stelle B des Bodens (in Fahrtrichtung mit einem vorgegebenen Abstand hinter bzw. fluchtend zu der Stelle A) mit der ersten Kamera durch optische Bilderfassung (im Wesentlichen) schräg oder senkrecht hin zum Boden und zeitlichem Nachhalten der für das Bodenprofil charakteristischen Messsignale.

Schritt b) umfasst insbesondere den Vergleich der mittels der ersten Kamera ermittelten Bodenprofile und Identifikation von in beiden Bodenprofilen auftauchenden charakteristischen Merkmalen des Rades, das dort den Boden überfahren hat. Daraus kann ermittelt werden, mit welchem zeitlichen und/oder räumlichen (bzw. geometrischen, örtlichen) Versatz diese Bodenprofile messtechnisch erfasst wurden.

Aus dem in Schritt b) ermittelten zeitlichen und/oder räumlichen (bzw. geometrischen, örtlichen) Versatz kann dann gemäß Schritt c) die tatsächliche Geschwindigkeit des Fahrzeugs ermittelt und berechnet werden, bevorzugt in der Auswerteeinheit.

Schritt d) umfasst insbesondere zumindest einen, bevorzugt alle, der folgenden Prozesse:
d.1) Ermitteln eines ersten Radprofils an einer Stelle C des Fahrzeugrades mit einer zweiten Kamera durch optische Bilderfassung (im Wesentlichen) schräg oder senkrecht hin zum Fahrzeugrad und zeitlichem Nachhalten der für das Radprofil charakteristischen Merkmale.
d.2) Ermitteln eines zweiten Bodenprofils an einer Stelle D des Fahrzeugrades (in Drehrichtung des Fahrzeugrades mit einem vorgegebenen Abstand hinter bzw. fluchtend zu der Stelle C) mit der zweiten Kamera durch optische Bilderfassung (im Wesentlichen) schräg oder senkrecht hin zum Fahrzeugrad und zeitlichem Nachhalten der für das Radprofil charakteristischen Merkmale.

Schritt e) umfasst insbesondere den Vergleich der mittels der zweiten Kamera ermittelten Radprofile und Identifikation von in beiden aufgenommenen Bildern auftauchenden charakteristischen Merkmalen des Radprofils. Daraus kann ermitteln werden, mit welchem zeitlichen Versatz diese Radprofile messtechnisch erfasst wurden.

Aus dem in Schritt e) ermittelten zeitlichen Versatz und der bekannten Position der zweiten Kamera mit Bezug auf die Fahrtrichtung kann dann gemäß Schritt f) die Radgeschwindigkeit des Fahrzeugs ermittelt und berechnet werden, bevorzugt in der Auswerteeinheit.

Die so ermittelte tatsächliche Geschwindigkeit des Fahrzeugs und der Radgeschwindigkeit wird in Schritt g) weiter zur Bestimmung des aktuellen Antriebsschlupfs verglichen. Hierfür kann die Radgeschwindikeit rechnerisch in eine berechnete Geschwindigkeit des Fahrzeugs überführt werden. Die tatsächlichen und rechnerisch ermittelten Geschwindigkeiten des Fahrzeugs können miteinander verglichen werden. Sind tatsächliche Geschwindigkeit und die auf Basis der Radgeschwindikeit bestimmte Geschwindigkeit des Fahrzeugs im Wesentlichen gleich, liegt folglich auch im Wesentlichen kein Antriebsschlupf vor. Liegt die tatsächliche Geschwindigkeit deutlich unterhalb der auf Basis der Radgeschwindigkeit bestimmte Geschwindigkeit des Fahrzeugs, liegt ein signifikanter Antriebsschlupf vor - das Antriebsrad dreht demnach durch.

Auf Basis des Ergebnisses von Schritt g) in Verbindung mit einem (fest oder variabel) vorgebbaren Referenzwert für den gewünschten bzw. maximal zulässigen Antriebsschlupf kann ein Hubmechanismus aktiviert werden. So kann bspw. das Anbaugerät bei Erreichen bzw. Überschreiten des Referenzwerts abgesenkt oder angehoben werden. Damit verändert sich die Last bzw. Zugkraft auf das Fahrzeug, was unmittelbar auf den tatsächlichen Antriebsschlupf Einfluss nimmt. Folglich kann durch den Betrieb des Hubmechanismus des Anbaugeräts der Antriebsschlupf des Fahrzeugs geregelt bzw. eingestellt werden.

Besonders bevorzugt wird die ermittelte tatsächliche Geschwindigkeit über dem Boden zur Bestimmung bzw. Einstellung des Antriebsschlupfs der angetriebenen Fahrzeugräder herangezogen. Mit Hilfe des Signals der tatsächlichen Fahrgeschwindigkeit und der optisch oder aufgrund der bekannten Drehzahl der angetriebenen Räder (z. B. aus Getriebesteuergerät oder der zusätzlichen Rades Radesensoren) ermittelten Radgeschwindigkeit kann der Schlupf der Antriebsräder bestimmt und begrenzt/eingestellt werden.

Bevorzugt ist, dass das in Schritt a) ermittelte Bodenprofil vom Fahrzeug während der Fahrt erzeugt wird. Hierbei handelt es sich bevorzugt um ein charakteristisches bzw. wiederkehrendes Muster im Boden. Ganz besonders bevorzugt wird das Bodenprofil von einem Hinterrad des Fahrzeugs kontinuierlich erzeugt. Ggf. kann das Radprofil charakteristische (bzw. einzelne) Profilmarkierungen aufweisen, die dann speziell mit der ersten Kamera detektiert werden.

Zudem kann die (direkt) mittels des Drehzahlsensors ermittelte Geschwindigkeit des Fahrzeugrades verwendet werden, wenn ein vorgebbarer Abweichungsparameter erreicht wird. Der Abweichungsparameter stellt insbesondere ein Maß für den Unterschied der unabhängig davon bestimmten "tatsächlichen" Geschwindigkeit des Fahrzeugs dar, wobei bei einem zu großen Unterschied eine Entscheidung dahingehend getroffen werden kann, dass der mittels des Drehzahlsensors ermittelten Geschwindigkeit Vorrang bzw. eine größere Bedeutung zu verleihen ist. So kann der Abweichungsparameter bspw. so festgesetzt sein, dass in Situationen, in denen eine Messung mit der Kamera versagt oder zu ungenau ist (z. B. wenn das Reifenprofil mit feuchter Erde zugesetzt ist), kurzzeitig auf die Geschwindigkeitsmessung mittels des Drehzahlsensors zurückgegriffen wird. Wird der Abweichungsparameter wieder unterschritten, kann wieder eine vorrangige Berücksichtigung der Geschwindigkeitsmessung mittels Kamera erfolgen.

Das Verfahren kann den folgenden zusätzlichen Schritt umfassen:
h) Ermitteln einer Zugkraft mit einer Zugkraftmesseinrichtung und Aktivieren einer Zugkraftbegrenzung zwischen Fahrzeug und Anbaugerät oder Anhänger, wenn der Antriebsschlupf größer als ein Referenzwert ist.

Weiterhin umfasst das vorgeschlagene Verfahren zweckmäßig den zusätzlichen Schritt:
i) Einregeln des Antriebsschlupfs auf einen fest vorgegebenen Sollwert.

Besondere Vorteile der hier vorgestellten Vorrichtung und/oder Verfahrensweise sind unter anderem:
- Die bekannte Messung der Geschwindigkeit über einen kostenintensiven Radarsensor wird vermieden.
- Videokameras finden zunehmend Verbreitung in der Umfelderfassung großer mobiler Arbeitsmaschinen, insbesondere auch Traktoren.
- Durch Nutzung von Videokameras bestehen Kostenvorteile gegenüber einem Radarsensor.
- Die Videokamera ermöglicht die Bestimmung von zweierlei Geschwindigkeiten mit einem Sensor, wo bislang zwei unterschiedliche Sensoren (Radar, Raddrehzahl) eingesetzt werden.

Die hier aufgezeigte Anordnung und/oder Methode zur Schlupfregelung bietet insbesondere folgende Vorteile:
- Zeit- und Kraftstoffaufwand werden verringert,
- der Reifenverschleiß wird verringert,
- der Boden wird geschont,
- der Fahrer wird entlastet,
- Festfahren wird vermieden.

Diese Funktionen werden durch Messung der tatsächlichen Geschwindigkeit mittels der Kameras in verlässlicher, genauer und technisch einwandfreier Weise realisiert.

Das vorgeschlagene Verfahren bzw. die Kameraanbringung zur Bestimmung der tatsächlichen Fahrzeuggeschwindigkeit über Grund kann insbesondere von allen Arbeitsmaschinen zur Bodenbearbeitung genutzt werden, welche über eine elektronischhydraulische Hubwerksregelung verfügen, welche es ermöglicht, ebenso den auftretenden Schlupf der Antriebsräder zu begrenzen bzw. diesen auf einen fest vorgegebenen Sollwert einzuregeln. Zu nennen sind hier hauptsächtlich Ackerschlepper bzw. Traktoren.

Die Erfindung und das technische Umfeld werden nachfolgend anhand von Figuren näher erläutert. Dabei sind regelmäßig gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: eine Seitenansicht eines Traktors mit zwei Kameras;
- Fig. 2:: eine Seitenansicht eines Traktors mit Pflug, wobei eine erste Kamera auf den Boden und eine zweite Kamera auf ein Hinterrad gerichtet ist sowie einen geschleppten Pflug;
- Fig. 3:: in Fahrtrichtung hintereinander positioniert jeweils zwei Bodenprofile und zwei Radprofile; und
- Fig. 4:: eine Seitenansicht eines Traktors mit Anhänger und Zugkraftmesseinrichtung, wobei der Traktor eine einzelne am Traktor angebrachte Kamera und einen dem hinteren Fahrzeugrad zugeordneten Drehzahlsensor aufweist.

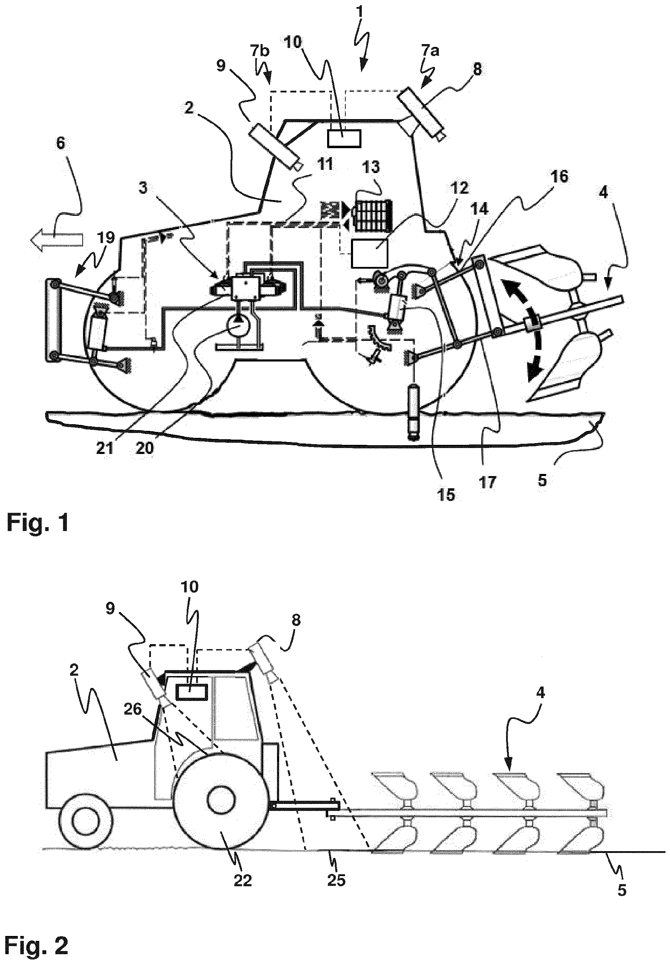

Fig. 1 zeigt die prinzipielle Darstellung der hier angegebenen Vorrichtung 1 an einem Fahrzeug 2, insbesondere nach Art eines Traktors bei der Bodenbearbeitung mit einem Anbaugerät 4 (Schleppgerät), insbesondere mit einem Pflug. Dabei zieht das Fahrzeug 2 bei einer Fahrt in Fahrtrichtung 6 das Anbaugerät 4 hinter sich her und durch eine Oberschicht des Bodens 5. Der allgemeine Fahrbetrieb des Fahrzeugs 2 kann über eine (ggf. separate) Fahrzeugsteuerung 12 beeinflusst werden. Die Lage bzw. Position des Anbaugeräts 4 kann mit einer hydraulischen Betätigungseinheit 3, aufweisend ein Steuergerät 13 zur Ansteuerung der hydraulischen Betätigungseinheit 3 und einen Hubmechanismus 15, eingestellt werden. Der Hubmechanismus 15 kann Teil eines Hubwerks 14 sein, das zum Beispiel einen Unterlenker 17 umfasst. Weiterhin kann ein Oberlenker(zylinder) 16 zur winkeligen Einstellung des Anbaugerätes vorgesehen sein. Die hydraulische Betätigungseinheit kann insbesondere wie folgt aufgebaut sein: Die Pumpe 20 fördert einen Ölstrom zum Regelventil 21, welches den Hubmechanismus 15 steuert. Dieser wirkt auf den Unterlenker 17, wodurch das Anbaugerät 4 gehoben, gehalten oder abgesenkt werden kann. Das Fahrzeug 2 kann zudem mit einem Fronthubwerk 19 ausgeführt sein, welches entsprechend nutzbar und betätigbar ist.

Weiter sind zwei Geschwindigkeitserfassungseinheiten 7a und 7b mit jeweils einer in Fahrtrichtung 6 des Fahrzeugs 2 hintereinander positionierten Kamera 8 bzw. 9 vorgesehen. Die erste Kamera 8 und/oder die zweite Kamera 9 können z. B. für optische Messungen geeignete Rückwärts- bzw. Rückfahrkameras oder speziell für den hier beschriebenen Anwendungszweck verbaute Digitalkameras (hochauflösend) sein. Diese Geschwindigkeitserfassungseinheiten 7a, 7b sind einer (gemeinsamen) Auswerteeinheit 10 zugeordnet, mit der insbesondere die Kameras 8, 9 kontrolliert betrieben und deren Messergebnisse ausgewertet werden können.

Weiter sind eine Vielzahl datenleitender Verbindungen 11 hin zu einer Fahrzeugsteuerung 12 und einem der hydraulischen Betätigungseinheit 3 zugeordneten Steuergerät 13 vorgesehen. Dabei kann die Auswerteeinheit 10 auch Teil des Steuergeräts 13 sein. Die Auswerteeinheit 10 kann zudem den Hubmechanismus 15 des Anbaugeräts 4 bedienen bzw. aktivieren.

Fig. 2 veranschaulicht beispielhaft den Aufbau der Messanordnung zur Bestimmung der tatsächlichen Geschwindigkeit des Fahrzeugs 2 und der Radgeschwindigkeit. Dabei ist die erste Kamera 8 in unmittelbarer Nähe hinter einem Hinterrad/Fahrzeugrad 22 des Fahrzeugs 2 angeordnet und bestimmt einen Abstand zum Boden 5 über die Zeit, so dass sich ein Bodenprofil 25 bestimmen lässt. Die in Fahrtrichtung 6 vorgeordnete zweite Kamera 9 ist mit einem Abstand parallel zur Fahrtrichtung 6 ortsfest an dem Fahrzeug 2 (und damit mit einer vorgegebenen Distanz zum Hinterrad/Fahrzeugrad 22) angebracht. Bevorzugt ist, dass das erfasste Bodenprofil 25 von einem Reifenprofil des Hinterrades/Fahrzeugrades 22 erzeugt wird. Durch den Reifenabdruck des Hinterrades/Fahrzeugrades 22 während der Bewegung entsteht eine charakteristische und gut detektierbare Profilerhebung, welche gut mit der Kamera 8 gemessen werden kann.

Mit der Anordnung der beiden Kameras 8, 9 können die tatsächliche Geschwindigkeit über dem Boden 5 und die Umfangsgeschwindigkeit des Hinterrades/Fahrzeugrades 22 ermittelt werden.

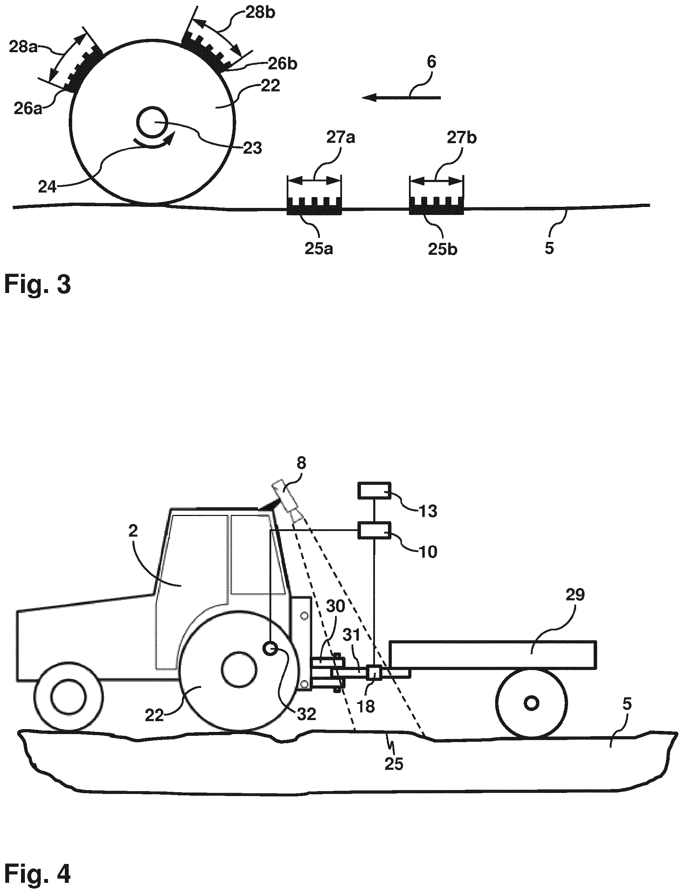

Fig. 3 zeigt in Fahrtrichtung 6 hintereinander positioniert jeweils zwei Bodenprofile 25a, 25b und zwei Radprofile 26a, 26b. Während der Fahrt des Fahrzeugs 2 bleiben die Bodenprofile 25a, 25b ortsfest, werden aber zeitlich versetzt von der sich mitbewegenden Kamera erfasst. Die Radprofile 26a, 26b drehen sich bei einer Bewegung des Fahrzeugs in Fahrtrichtung 6 und in Drehrichtung 24 des radesFahrzeugrades 22 um die Achse 23. Mit 27a, 27b und 28a, 28b sind die Längen der Bodenprofile 25a, 25b bzw. Radprofile 26a, 26b bezeichnet.

Fig. 4 veranschaulicht einen Traktor, an dem nur eine einzige Kamera 8 positioniert ist. Dem (hinteren) Fahrzeugrad 22 des Traktors ist ein Drehzahlsensor 32 zugeordnet. Der Drehzahlsensor 32 ist elektrisch und datenleitend mit der Auswerteeinheit 10 verbunden. Mit dieser Anordnung wird die Fahrgeschwindigkeit des Traktors mit der Kamera 8 und die Radgeschwindigkeit des radesFahrzeugrades 22 mit dem Drehzahlsensor 32 bestimmt. Ein Anhänger 29 ist über eine Deichsel 31 und eine Kupplung 30 mit dem Traktor verbunden. In der Deichsel 31 ist eine Zugkraftmesseinrichtung 18 verbaut, die mit der Auswerteeinheit 10 datenleitend elektrisch verbunden ist.

Mit dieser Vorrichtung 1 lässt sich insbesondere der Betrieb der hydraulischen Betätigungseinheit 3 in Abhängigkeit von bzw. zur Regelung des Antriebsschlupfs steuern. Hierzu kann zunächst das Bodenprofil 25 während der Fahrt des Fahrzeugs 2 mittels der ersten Kamera 8 erfasst werden. Weiter kann dann der zeitliche Versatz der mit der Kamera 8 bestimmten Bodenprofile 25a, 25b bestimmt werden. Daraus lässt sich die tatsächliche Geschwindigkeit des Fahrzeugs 2 ermitteln. Die so ermittelte Fahrzeuggeschwindigkeit kann mit einer erwarteten (bzw. motor- oder radeseitig bestimmten) Radgeschwindigkeit des radesFahrzeugrades 22 zur Bestimmung eines Antriebsschlupfs verglichen werden. Ergibt sich daraus, dass der Antriebsschlupf in einem unerwünschten Bereich liegt, kann (von der Auswerteeinheit 10 indiziert) dann der Hubmechanismus 15 des Anbaugeräts 4 aktiviert werden, um die wirkende Widerstandskraft anzupassen und damit auch den Antriebsschlupf zu beeinflussen.

Nach einem möglichen Auswertealgorithmus werden die Signale der Kameras 8, 9 gemäß den oben erläuterten Schritten a) und d) dahingehend ausgewertet, dass eine Profillänge 27a, 27b des Bodens 5 und eine Profillänge 28a, 28b des Fahrzeugrades 22 über der Zeit vorliegen. Durch eine Kreuzkorrelation der Signale aus den Kameras 8, 9 kann auf den Zeitversatz der jeweils generierten Messsignale geschlossen werden, vgl. Erläuterung zu den Schritten b) und e). Weiter werden gemäß den Schritten c) und f) die Geschwindigkeiten des Fahrzeugs 2 und des Fahrzeugrades 22 bestimmt und in Schritt d) zur Bestimmung des Antriebsschlupfs miteinander verglichen.

### Bezugszeichenliste

- 1: Vorrichtung
- 2: Fahrzeug
- 3: hydraulische Betätigungseinheit
- 4: Anbaugerät
- 5: Boden
- 6: Fahrtrichtung
- 7a: Geschwindigkeitserfassungseinheit Fahrzeug
- 7b: Geschwindigkeitserfassungseinheit Fahrzeugrad
- 8: erste Kamera
- 9: zweite Kamera
- 10: Auswerteeinheit
- 11: datenleitende Verbindung
- 12: Fahrzeugsteuerung
- 13: Steuergerät
- 14: Hubwerk
- 15: Hubmechanismus
- 16: Oberlenker
- 17: Unterlenker
- 18: Zugkraftmesseinrichtung
- 19: Fronthubwerk
- 20: Pumpe
- 21: Regelventil
- 22: Fahrzeugrad
- 23: Achse
- 24: Drehrichtung
- 25a: erstes Bodenprofil
- 25b: zweites Bodenprofil
- 26a: erstes Radprofil
- 26b: zweites Radprofil
- 27a: erste Länge Bodenprofil
- 27b: zweite Länge Bodenprofil
- 28a: erste Länge Radprofil
- 28b: zweite Läge Radprofil
- 29: Anhänger
- 30: Kupplung
- 31: Deichsel
- 32: Drehzahlsensor

## Patentansprüche

1. Vorrichtung (1) zur Regelung des Fahrbetriebs eines Fahrzeugs (2) mit einem Anbaugerät (4) oder Anhänger (29), umfassend zumindest eine Geschwindigkeitserfassungseinheit (7a, 7b) mit mindestens einer Kamera (8, 9), eine Auswerteeinheit (10) und eine datenleitende Verbindung (11) hin zu einem Steuergerät (13), wobei die Geschwindigkeit des Fahrzeugs (2) mit mindestens einer Kamera (8, 9) und die Geschwindigkeit mindestens eines Fahrzeugrades (22) sensorisch bestimmbar sind, wobei die Auswerteeinheit (10) dazu eingerichtet ist, die folgenden Verfahrensschritte durchzuführen:
A) Bestimmen der Geschwindigkeit des Fahrzeugs (2) mit der mindestens einen Kamera (8, 9);
B) Bestimmen der Umfangsgeschwindigkeit mindestens eines Fahrzeugrades (22) mit der mindestens einen Kamera (8, 9);
C) Vergleichen der Geschwindigkeit des Fahrzeugs (2) mit der Umfangsgeschwindigkeit des mindestens einen Fahrzeugrades (22) zur Ermittlung eines Antriebsschlupfs.

2. Vorrichtung (1) nach Patentanspruch 1, wobei eine einzelne Kamera (8, 9) hin zum Boden (5) und auf das Fahrzeugrad (22) gerichtet ist.

3. Vorrichtung (1) nach Patentanspruch 1, wobei mindestens zwei Kameras (8, 9) vorgesehen sind, wobei eine erste Kamera (8) hin zum Boden (5) und eine zweite Kamera (9) auf das Fahrzeugrad (22) gerichtet ist.

4. Vorrichtung (1) nach einem der vorhergehenden Patentansprüche, wobei eine hydraulische Betätigungseinheit (3) vorgesehen ist, die einen Hubmechanismus (15) für das Anbaugerät (4) umfasst, der von der Auswerteeinheit (10) aktivierbar ist.

5. Vorrichtung (1) nach einem der vorhergehenden Patentansprüche, wobei zu der mindestens einen Kamera (8, 9) zusätzlich eine Zugkraftmesseinrichtung (18) vorhanden ist, die mit der Auswerteeinheit (10) datenleitend verbunden ist.

6. Verfahren zur Regelung des Fahrbetriebs eines Fahrzeugs (2) mit einem Anbaugerät (4) oder einem Anhänger (29) an dem Fahrzeug (2), umfassend zumindest die folgenden Schritte:
A) Bestimmen der Geschwindigkeit des Fahrzeugs (2) mit der mindestens einen Kamera (8, 9);
B) Bestimmen der Umfangsgeschwindigkeit mindestens eines Fahrzeugrades (22) mit der mindestens einen Kamera (8, 9);
C) Vergleichen der Geschwindigkeit des Fahrzeugs (2) mit der Umfangsgeschwindigkeit des mindestens einen Fahrzeugrades (22) zur Ermittlung eines Antriebsschlupfs.

7. Verfahren nach Patentanspruch 6, umfassend zumindest die folgenden Schritte:
a) Bestimmen eines Bodenprofils (25, 25a, 25b) während der Fahrt des Fahrzeugs (2) mittels mindestens einer hin zum Boden (5) gerichteten Kamera (8, 9);
b) Ermitteln zumindest eines zeitlichen oder räumlichen Versatzes der jeweils mit der mindestens einen Kamera (8, 9) bestimmten Bodenprofile (25, 25a, 25b);
c) Ermitteln der Geschwindigkeit des Fahrzeugs (2) aus zumindest dem zeitlichen oder räumlichen Versatz;
d) Bestimmen eines Radprofils (26, 26a, 26b) während der Fahrt des Fahrzeugs (2) mittels mindestens einer Kamera (8, 9);
e) Ermitteln zumindest eines zeitlichen oder räumlichen Versatzes der jeweils mit der mindestens einen Kamera (8, 9) bestimmten Radprofile (26, 26a, 26b);
f) Ermitteln der Geschwindigkeit des Fahrzeugrades (22) aus zumindest dem zeitlichen oder räumlichen Versatz;
g) Vergleichen der ermittelten Geschwindigkeiten zur Bestimmung eines Antriebsschlupfs.

8. Verfahren nach einem der Patentansprüche 6 oder 7, umfassend den zusätzlichen Schritt:
h) Ermitteln einer Zugkraft mit einer Zugkraftmesseinrichtung (18) und Aktivieren einer Zugkraftbegrenzung zwischen Fahrzeug (2) und Anbaugerät (4) oder Anhänger (29), wenn der Antriebsschlupf größer als ein vorgegebener Referenzwert ist.

9. Verfahren nach einem der Patentansprüche 6 bis 8, umfassend den zusätzlichen Schritt:
i) Einregeln des Antriebsschlupfs auf einen fest vorgegebenen Sollwert.

## Claims

1. Device (1) for controlling the driver operation of a vehicle (2) with an implement (4) or trailer (29), comprising at least one speed-sensing unit (7a, 7b) with at least one camera (8, 9), one evaluation unit (10) and one data-conducting connection (11) to a control unit (13), wherein the speed of the vehicle (2) can be determined with at least one camera (8, 9), and the speed of at least one vehicle wheel (22) can be determined by sensor, wherein the evaluation unit (10) is configured to carry out the following method steps:
A) determining the speed of the vehicle (2) with the at least one camera (8, 9);
B) determining the circumferential speed of at least one vehicle wheel (22) with the at least one camera (8, 9);
C) comparing the speed of the vehicle (2) with the circumferential speed of the at least one vehicle wheel (22) in order to determine a drive slip.

2. Device (1) according to Patent Claim 1, wherein a single camera (8, 9) is directed towards the ground (5) and onto the vehicle wheel (22).

3. Device (1) according to Patent Claim 1, wherein at least two cameras (8, 9) are provided, wherein a first camera (8) is directed towards the ground (5), and a second camera (9) is directed onto the vehicle wheel (22) .

4. Device (1) according to one of the preceding Patent Claims, wherein a hydraulic activation unit (3) is provided which comprises a lifting mechanism (15) for the implement (4), which mechanism can be activated by the evaluation unit (10).

5. Device (1) according to one of the preceding Patent Claims, wherein as well as the at least one camera (8, 9) there is additionally a tractive-force-measuring device (18) which is connected in a data-conducting fashion to the evaluation unit (10).

6. Method for controlling the driving operation of a vehicle (2) with an implement (4) or a trailer (29) on the vehicle (2), comprising at least the following steps:
A) determining the speed of the vehicle (2) with the at least one camera (8, 9);
B) determining the circumferential speed of at least one vehicle wheel (22) with the at least one camera (8, 9);
C) comparing the speed of the vehicle (2) with the circumferential speed of the at least one vehicle wheel (22) in order to determine a drive slip.

7. Method according to Patent Claim 6, comprising at least the following steps:
a) determining a ground profile (25, 25a, 25b) during the travel of the vehicle (2) by means of at least one camera (8, 9) which is directed towards the ground (5);
b) determining at least one chronological or spatial offset between the ground profiles (25, 25a, 25b) which are respectively determined with the at least one camera (8, 9);
c) determining the speed of the vehicle (2) from at least the chronological or spatial offset;
d) determining a wheel profile (26, 26a, 26b) during the travel of the vehicle (2) by means of at least one camera (8, 9);
e) determining at least one chronological or spatial offset between the wheel profiles (26, 26a, 26b) which are respectively determined with the at least one camera (8, 9);
f) determining the speed of the vehicle wheel (22) from at least the chronological or spatial offset;
g) comparing the determined speeds in order to determine a drive slip.

8. Method according to one of Patent Claims 6 and 7, comprising the additional step:
h) determining a tractive force with a tractive-force-measuring device (18) and activating a tractive force limitation between the vehicle (2) and implement (4) or trailer (29) if the drive slip is greater than a predefined reference value.

9. Method according to one of Claims 6 to 8, comprising the additional step:
i) adjusting the drive slip to a permanently predefined setpoint value.

## Revendications

1. Dispositif (1) de réglage du fonctionnement de conduite d'un véhicule (2) comportant un outil porté (4) ou une remorque (29), comprenant au moins une unité de détection de vitesse (7a, 7b) munie d'au moins une caméra (8, 9), une unité d'évaluation (10) et une liaison de transmission de données (11) vers un appareil de commande (13), dans lequel la vitesse du véhicule (2) peut être déterminée à l'aide d'au moins une caméra (8, 9) et la vitesse d'au moins une roue de véhicule (22) peut être déterminée par des capteurs, dans lequel l'unité d'évaluation (10) est conçue pour exécuter les étapes suivantes du procédé :
A) déterminer la vitesse du véhicule (2) à l'aide d'au moins une caméra (8, 9) ;
B) déterminer la vitesse périphérique d'au moins une roue de véhicule (22) à l'aide de ladite au moins une caméra (8, 9) ;
C) comparer la vitesse du véhicule (2) à la vitesse périphérique de ladite au moins une roue de véhicule (22) pour déterminer un patinage de traction.

2. Dispositif (1) selon la revendication 1, dans lequel une seule caméra (8, 9) est dirigée vers le sol (5) et sur la roue de véhicule (22).

3. Dispositif (1) selon la revendication 1, dans lequel il est prévu au moins deux caméras (8, 9), dans lequel une première caméra (8) est dirigée vers le sol (5) et une seconde caméra (9) est dirigée sur la roue de véhicule (22) .

4. Dispositif (1) selon l'une des revendications précédentes, dans lequel il est prévu une unité d'actionnement hydraulique (3) qui comprend un mécanisme de levage (15) destiné à l'outil porté (4), qui peut être activé par l'unité d'évaluation (10).

5. Dispositif (1) selon l'une des revendications précédentes, dans lequel, en plus de ladite au moins une caméra (8, 9), il est prévu un dispositif de mesure de force de traction (18) qui est relié pour la transmission de données à l'unité d'évaluation (10).

6. Procédé de réglage du fonctionnement de conduite d'un véhicule (2) comportant un outil porté (4) ou une remorque (29) sur le véhicule (2), comprenant au moins les étapes suivantes :
A) déterminer la vitesse du véhicule (2) à l'aide de ladite au moins une caméra (8, 9)
B) déterminer la vitesse périphérique d'au moins une roue de véhicule (22) à l'aide de ladite au moins une caméra (8, 9) ;
C) comparer la vitesse du véhicule (2) à la vitesse périphérique de ladite au moins une roue de véhicule (22) pour déterminer un patinage de traction.

7. Procédé selon la revendication 6, comprenant au moins les étapes suivantes :
a) déterminer un profil du sol (25, 25a, 25b) pendant le déplacement du véhicule (2) au moyen d'au moins une caméra (8, 9) dirigée vers le sol (5) ;
b) déterminer au moins un décalage temporel ou spatial des profils du sol (25, 25a, 25b) déterminés à l'aide de ladite au moins une caméra (8, 9) ;
c) déterminer la vitesse du véhicule (2) à partir d'au moins le décalage temporel ou spatial ;
d) déterminer un profil de roue (26, 26a, 26b) pendant le déplacement du véhicule (2) au moyen d'au moins une caméra (8, 9) ;
e) déterminer au moins un décalage temporel ou spatial des profils de roues (26, 26a, 26b) respectivement déterminés à l'aide de ladite au moins une caméra (8, 9) ;
f) déterminer la vitesse de la roue de véhicule (22) à partir d'au moins le décalage temporel ou spatial ;
g) comparer les vitesses déterminées pour déterminer le patinage de traction.

8. Procédé selon l'une des revendications 6 ou 7, comprenant l'étape supplémentaire suivante :
h) déterminer une force de traction à l'aide d'un dispositif de mesure de force de traction (18) et activer une limitation de la force de traction entre le véhicule (2) et l'outil porté (4) ou la remorque (29) lorsque le patinage de traction est supérieur à une valeur de référence prédéterminée.

9. Procédé selon l'une des revendications 6 à 8, comprenant l'étape supplémentaire suivante :
i) régler le patinage de traction à un point de consigne prédéterminé de manière fixe.
